# EUROPEAN PATENT APPLICATION

(11) **EP 1 843 349 A1**
(43) Date of publication of application: **10.10.2007**
(21) Application number: 07104823.5
(22) Date of filing: 23.03.2007
(51) Int. Cl.: G11B 27/10, G11B 27/32, G06F 17/30, G06F 3/048

(54) **Reproducing apparatus, content selection method, and program**

(30) Priority: 03.04.2006 JP 2006101885
(71) Applicant: Sony Corporation, Minato-ku Tokyo (JP)
(72) Inventor: Tsuchiya, Tomomi, Tokyo (JP)
(74) Representative: Melzer, Wolfgang

(57) **Abstract**

A reproducing apparatus includes an operator block, a storage block, a reproducing block, and a control block. The storage block is configured to store content management information having identification information for identifying content data and attribute information about the content data and a sort list with the content management information arranged by group on the basis of predetermined the attribute information. The reproducing block is configured to reproduce content data. The control block is configured to set a sort list to be referenced when a predetermined operation is executed through the operator block and, when a predetermined operation is entered through the operator block, select, on the basis of the set sort list, a group adjacent to a group to which content data being reproduced belongs.

## Description

### CROSS REFERENCES TO RELATED APPLICATIONS

The present invention contains subject matter related to Japanese Patent Application JP 2006-101885 filed in the Japanese Patent Office on April 3, 2006, the entire contents of which being incorporated herein by reference.

### BACKGROUND OF THE INVENTION

### 1. Filed of the Invention

The present invention relates to a reproducing apparatus for reproducing content, such as music for example, and a content selecting method. The present invention also relates to a program that is executed on that reproducing apparatus.

### 2. Description of the Related Art

Recently, very small-sized portable recording/reproducing devices in which recording media, such as a semiconductor memory, is incorporated have become popular. Most of these portable recording/reproducing devices are configured to enable communication with information processing apparatuses, such as personal computers, thereby copying music data from connected information processing apparatuses to these portable recording/reproducing devices. This copy and storage operations are controlled and managed by a dedicated application software program installed on each of the information processing apparatuses. Namely, the installation of a dedicated application software program on the information processing apparatus allows the easy capture of music data from recording media, such as CDs (Compact Discs), and music distribution sites on the Internet, for example, and the easy editing of the captured music data (classification of music data into albums, creation of play list, and so on). Some dedicated application programs have capabilities of transferring music data from the information processing apparatus to the recording/reproducing device to copy the transferred data thereto. By following an operation guide displayed on a screen of these application programs, the user can easily copy music data from the information processing apparatus to the recording/reproducing device.

Meanwhile, the recent dramatic increase in storage capacity of recording media pushes up the capacity of the above-mentioned recording/reproducing devices for storing music data. For example, even those recording/reproducing devices that have a semiconductor memory for storing music data are capable of allocating a storage capacity of as large as several hundred megabytes (MB) to several gigabytes (GB). This storage capacity can store several hundred to several thousand titles of music data, for example.

However, storing masses of music data in each recording/reproducing device makes it difficult to promptly search the storage for desired titles of music. In order to facilitate this search, some recording/reproducing devices are configured to enabling the searching based on the use of attribute information given to each title of music, such as album name, artist name, and genre name, for example.

The practiced music search and selection (or designation) based on the above-mentioned attribute information are executed in a following procedure, for example. First, in a search operation, the user of each recording/reproducing device displays a search menu screen thereon. In this screen, such attribute information of upper layer is displayed, as attached to album and artist, for example. Then, if an album is designated, the information about all recorded albums is displayed in a list form. Designating one of the listed album names displays a list of the information about each title of music with the designated album name attached as attribute information. Then, the user can designate any desired title of music to start reproducing the music data having the designated title name.

If the artist is designated in the above-mentioned menu screen, the information about all recorded artist names is displayed in a list form. Designating one of the artist names displays a list of albums of the designated artist. Namely, a list of the albums of that artist is displayed. Designating an album name from the list of albums of the designated artist also displays the information about music titles having the designated album name in a list form. Then, the user can designate any desired music title from the list to reproduce the music data having the designated music title.

At this moment, the search processing as described above may be executed by use of a search list generated for each of search modes (in this case, album search and artist search) in advance. Namely, in the case of the search list for album search, a list is generated in advance such that the titles of recorded music are sorted by album name. In the case of the search list for artist search, a list is generated in advance such that the titles of recorded music are first sorted by artist name and then by album name. Thus, generating lists necessary for these search modes in advance eliminates the necessity for generating a necessary list every time an album or an artist is designated, thereby eventually realizing a search operation significantly higher in speed than before.

It should be noted that, after a desired music title is designated in the above-mentioned search mode and the reproduction of the designated music title is started, a reproduction range is set to a range defined by the search. To be more specific, if an album is designated from a list of albums in the album search or the artist search, music titles are designed from the designated album, and the designated music titles are reproduced, the range of reproduction is limited to the designated album.

If the user wants to reproduce another album or another artist, the upper layer of the search screen is returned again by a user operation. Namely, if the reproduction of music is being executed in the album search mode, the album list screen is displayed again by the predetermined user operation, from which the user newly designate a desired album. If the reproduction of music is being executed in the artist search mode, the album list screen, one layer up, is displayed again by the predetermined user operation, from which the user newly designate a desired album, thereby moving to the new album of the designated artist. Returning to the artist list screen on the upper layer by executing the above-mentioned predetermined user operation twice allows the designation of another artist to select a desired album from the album list on the lower layer.

On the other hand, when moving to the reproduction of the music of another album or another artist as described above, a jump operation may be executed by the user in which switching between required groups, such as albums or artists, is directly executed, instead of reselecting an album or an artist from a list displayed on screen as described above. For example, if a group jump operation such as above is executed by the user while the music of a particular album is being reproduced, the reproduction of the music of another album is started accordingly.

Technologies related hereto are disclosed in the following patent documents, for example.
Patent document 1: Japanese Patent Laid-open No. 2002-116933
Patent document 2: Japanese Patent Laid-open No. Hei 9-233161

### SUMMARY OF THE INVENTION

In related-art technologies, a jump action between groups in response to a group jump operation by the user as described above is executed in a range specified as the range of reproduction. As a result, if a group jump operation is executed while a track is being reproduced by executing an album search operation for albums and then tracks as described above, no jump action between albums is executed. Namely, if a track is reproduced by an album search operation, the range of reproduction is the range of that one selected album as described above.

This group jump operation is effective if a plurality of albums are contained in the range of reproduction. For example, the search mode also includes a mode of listing all recorded tracks in the order of album name or track name. If a track is reproduced in this mode, the range of reproduction covers all tracks arranged in the order of album names or track names in the list display. Executing a group jump operation at this moment allows the user to effectively jump to an album different from an album being reproduced on the above-mentioned list display or an album adjacent to an album being reproduced.

Restricting a group jump operation in the above-mentioned method results in the case in which a group jump operation can be executed and the case in which a group jump operation cannot be executed depending upon a path to the specification of the reproduction of content if the reproducing apparatus is reproducing the same content. For example, if the user selects desired content in the sequence of artist name, album name, and track name and directs the reproduction of the selected content, no group jump action can be executed. If the reproduction of this desired content is executed in the order of artist name, all pieces of music associated with that artist, and track names, a group jump action can be executed. Therefore, it is difficult for the user to make distinction between cases in which jump operations can be executed and not executed, thereby confusing the user in search operation.

Therefore, the present invention addresses the above-identified and other problems associated with related-art methods and apparatuses and solves the addressed problems by providing a reproducing apparatus, a content selection method, and a program. In carrying out the invention and according to one embodiment thereof, there is provided a reproducing apparatus configured to manage content data on the basis of content management information in which identification information for uniquely identifying content data recorded to a predetermined recording media is related with attribute information of this content data. This reproducing apparatus has a recording media for recording a sort list in which the above-mentioned identification information in the above-mentioned content management information is sorted by group on the basis of the contents of the above-mentioned attribute information. The reproducing apparatus also has a reproducing block, an operator block, and a computation block. The computation block is configured to execute correlation processing for relating the above-mentioned sort list with a predetermined operation to be executed by the user through the operator block and group selection processing for selecting a predetermined group in accordance with the above-mentioned group arrangement on the sort list related with the above-mentioned predetermined operation by the above-mentioned correlation processing.

The above-mentioned configuration allows the selection of any group on the sort list by executing a predetermined operation and can solve a problem that a group jump action may not be effectuated by executing a jump operation. In addition, relating a predetermined operation with a sort list in advance as described above allows the user to execute a group jump operation. Consequently, the user can independently execute such jump operations independently of the contents of search as a group jump in accordance with another album arrangement and a group jump in units of another kind of group, for example, thereby expanding the degree of freedom in group jump.

As described and according to an embodiment of the present invention, any group on a sort list provided for jump actions can be selected in accordance with a predetermined operation by the user and consequently a problem that a jump operation may not effectuate any group jump can be solved. Namely, the above-mentioned configuration according to an embodiment of the invention can surely prevent a situation in which the user is confused by the cases in which a jump operation can cause a group jump and may not cause a group jump, thereby realizing an excellent user interface.

In addition, the above-mentioned configuration according to an embodiment of the invention can expand the degree of freedom in group jump.

### BRIEF DESCRIPTION OF THE DRAWINGS

FIG. 1 is a schematic diagram illustrating an overview of a recording/reproducing system practiced as one embodiment of the invention;
FIG. 2 is a block diagram illustrating an exemplary internal configuration of an information processing apparatus practiced as another embodiment of the invention;
FIG. 3 is a diagram describing functions of a content management application to be installed on the above-mentioned information processing apparatus;
FIG. 4 is a data structure diagram conceptually illustrating a structure of content management information;
FIG. 5 is a block diagram illustrating an exemplary internal configuration of a reproducing apparatus practiced as still another embodiment of the invention;
FIGS. 6A and 6B are external views of the above-mentioned reproducing apparatus;
FIGS. 7A to 7D are diagrams illustrating screen transitions indicative of an artist search procedure;
FIGS. 8A to 8C are diagrams illustrating screen transitions indicative of an album search procedure;
FIG. 9 is a diagram conceptually illustrating a structure of an album jump list;
FIG. 10 is a diagram conceptually illustrating a structure of an artist-sorted album jump list;
FIG. 11 is a diagram conceptually illustrating a structure of an artist jump list;
FIGS. 12A to 12C are diagrams illustrating screen transitions indicative of a jump mode selection and setting procedure;
FIG. 13 is a diagram illustrating a sequential display operation to be executed in the album jump mode;
FIG. 14 is a diagram illustrating a sequential display operation to be executed in the artist jump mode;
FIG. 15 is a flowchart indicative of a processing operation to be executed when the jump mode is selectively set as a processing operation for realizing an operation practiced as one embodiment of the invention; and
FIG. 16 is a flowchart indicative of a processing operation to be executed when a jump action is executed as a processing operation for realizing an operation practiced as another embodiment of the invention.

### DETAILED DESCRIPTION OF THE PREFERRED EMBODIMENTS

This invention will be described in further detail by way of best modes (hereafter referred to as embodiments) thereof with reference to the accompanying drawings. The description will be made in the following sequence:
(1) System overview
(2) Configuration of information processing apparatus
(3) Configuration of reproducing apparatus
(4) Search function
(5) Group jump action practiced as one embodiment
(6) Processing operation

### (1) System overview:

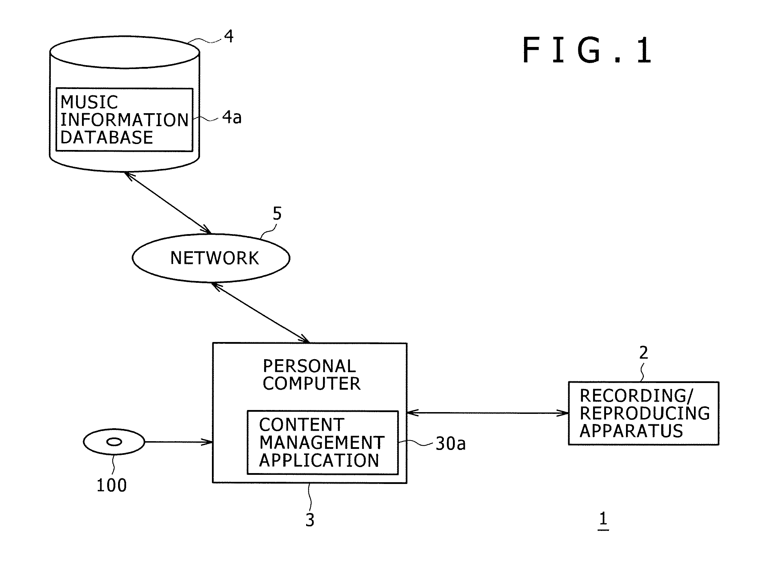

Now, referring to FIG. 1, there is shown an overview of a recording/reproducing system 1 practiced as one embodiment of the invention. In FIG. 1, the recording/reproducing system 1 is configured by at least a recording/reproducing apparatus 2, a personal computer 3, a server apparatus 4, a network 5, and an optical disk 100. The recording/reproducing apparatus 2, one embodiment of the present invention, is assumed to be a portable audio player(and recorder), for example. The recording/reproducing apparatus 2 incorporates a recording media; more particularly, the recording/reproducing apparatus 2 is configured to incorporate a semiconductor memory, such as a flash memory, for example.

The personal computer 3 is configured to execute data communication with the recording/reproducing apparatus 2 via a USB (Universal Serial Bus) cable for example. It is also practicable for the personal computer 3 to execute, via the network 5, data communication with external devices (the server apparatus 4 for example) connected to the personal computer 3.

The optical disk 100 is assumed to be a music CD (Compact Disc) that is marketed and distributed as a package media, for example. The network 5 is the Internet, for example.

The use of the recording/reproducing system 1 is assumed that content data (in this example, audio data that is music) captured from the optical disk 100 for example in the personal computer 3 is copied to the recording/reproducing apparatus 2 and the recording/reproducing apparatus 2 reproduces the copied content data.

It should be noted that an application program (to be more specific, a content management application 30a to be described later) for realizing the above-mentioned use forms of the recording/reproducing system 1 is installed on the personal computer 3. The content management application 30a collectively controls and manages a series of processing operations, namely, the capturing of content data from the optical disk 100, the editing of the captured content data, and the copying of the content data to the recording/reproducing apparatus 2. For example, the user can start up this content management application and perform operations by following instructions displayed on a screen of the personal computer 3, thereby executing the capturing of content data from the optical disk 100 into the personal computer 3 and the editing of the captured content data (for example, the partitioning of the content data on an album basis, the creation of a play list, and the deletion of the content data). The content management application 30a also has a function of transferring (or copying) content data stored in the personal computer 3 to the recording/reproducing apparatus 2 as instructed by the user when the recording/reproducing apparatus 2 gets connected to the personal computer 3.

The content management application 30a further provides a function of compressing the content data (or audio data) captured from the optical disk 100 by use of a data compression algorithm, such as ATRAC (Adaptive TRansform Acoustic Coding) or MP3 (MPEG Audio Layer 3), and recording the compressed content data, thereby recording significantly more pieces of content data to the recording/reproducing apparatus 2.

In addition, the content management application 30a allows the acquisition of such attribute information associated with content data captured from the optical disk 100 as a name of each track (or a music title), a name of each album in which particular tracks are collected, and a name of each artist, for example.

It is in the past practiced that, on the basis of information extracted from the optical disk 100, the attribute information about tracks recorded thereto is obtained. For example, the TOC (Table Of Contents) data of each CD records the number of tracks (or the number of pieces of music) recorded thereto, the address of each track (or absolute time information), and a total play time of that CD, and so on. These pieces of attribute information are common to all CDs of a same title. However, it is virtually impossible for CDs of different titles to have the same TOC data. Therefore, a code unique to each CD title can be generated from TOC data. Constructing beforehand a music information database that stores the attribute information of each track of each title as related to this unique code allows the retrieval, from this database, of the attribute information of the music recorded to a particular CD on the basis of the unique code generated from that CD.

In this case, it is assumed that the above-mentioned music information database be constructed on the server apparatus 4 connected to the network 5 as shown in FIG. 1 (namely, a music information data base 4a). In response to an instruction for the capturing of content data from the loaded optical disk 100, for example, the content management application 30a generates the above-mentioned unique code on the basis of the TOC data of the loaded optical disk 100. Then, accessing the server apparatus 4, the content management application 30a searches the music information database 4a by use of this unique code as a search condition, thereby retrieving the attribute information corresponding to the content data recorded to the loaded optical disk 100. Then, the content management application 30a generates management information such that the content data captured from the optical disk 100 is related with the captured attribute information.

It should be noted that a technique for acquiring the attribute information corresponding to the content data recorded to the optical disk 100 from the music information database as described above is well known, so that details of this technique will be skipped from the description hereof. It should also be noted that, in the present example, the music information database 4a is constructed on the server apparatus 4 connected to the personal computer 3 via the network 5; however, it is also practicable all or part of the music information database 4a may be arranged on the personal computer 3.

In the recording/reproducing apparatus 2, the content data stored in the personal computer 3 and related with attribute information is copied as described above and the copied content data is recorded to an incorporated recording media. Consequently, the recording/reproducing apparatus 2 is able to reproduce the content data recorded to the recording media and, at the same time, display such content data attribute information as track name, album name, and artist name, for example.

It should be noted that, in the present embodiment, the apparatus for transferring content data to be reproduced on the recording/reproducing apparatus 2 is the personal computer 3; however, it is also practicable, to use, instead of the personal computer 3, another computer device, such as a PDA (Personal Digital Assistants) or another information processing device, such as a home game machine or a home information appliance.

### (2) Configuration of information processing apparatus:

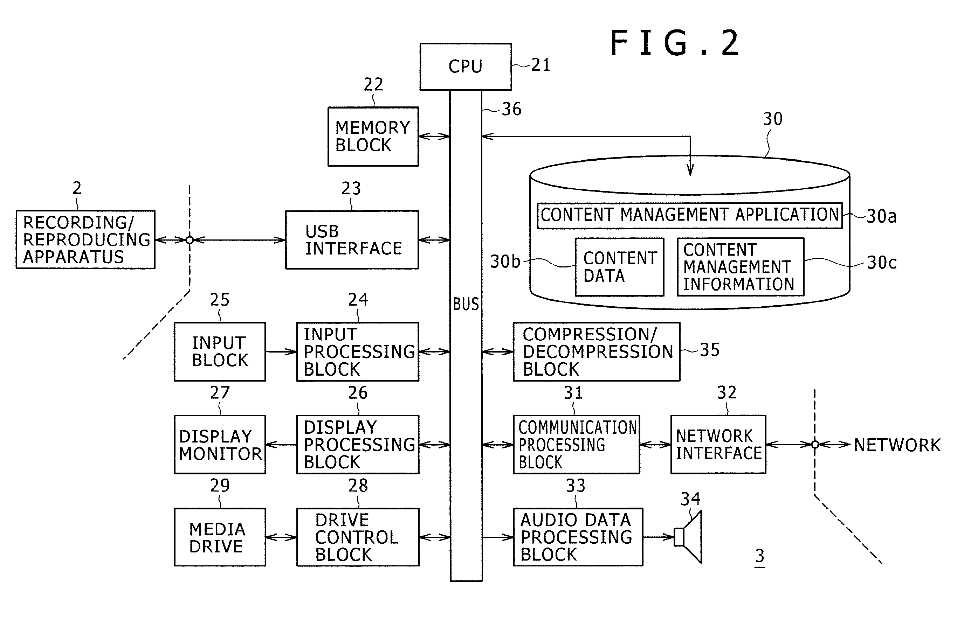

Referring to FIG. 2, there is shown a block diagram illustrating an exemplary internal configuration of the personal computer 3 (or the information processing apparatus) shown in FIG. 1. In FIG. 2, a CPU 21 controls the entire personal computer 3 and executes computation processing as instructed by a started up program. For example, the CPU 21 executes the processing in response to user input/output operations, stores data files into a HDD 30, and creates and updates management information. The CPU 21 also transfers control signals and data between the component blocks of the personal computer 3 via a bus 36 shown.

A memory block 22 wholly includes a ROM, a RAM, and a flash memory, for example, that is used by the CPU 21 for executing necessary processing. The ROM in the memory block 22 stores an operating program for the CPU 21, a program loader, and so on. The flash memory in the memory block 22 stores various computation coefficients and parameters used by programs, for example. The RAM in the memory block 22 temporarily provides a data area and a task area that may be required for the execution of programs.

A USB (Universal Serial Bus) interface 23 provides data communication between the personal computer 3 and external devices connected thereto via a USB cable. Especially, in this case, various kinds of data, such as audio data, are transmitted and received between the personal computer 3 and the recording/reproducing apparatus 2 shown in FIG. 2 over the USB interface 23.

In the HDD 30, the storage of data files and the creation and updating of management information, for example, are executed under the control of the CPU 21 as described above. For example, the content data captured from the optical disk 100 as described before with reference to FIG. 1 is stored in the HDD 30. As described above, the content data in this case is managed as related with the attribute information obtained from the music information database 4a. The HDD 30 also stores content management information for managing such content data and the attribute information thereof in a correlated manner. As shown in FIG. 2, the content data stored in the HDD 30 is content data 30b in this example. Also, the content management information stored in the HDD 30 is content management information 30c

The HDD 30 also stores programs (or applications) necessary for the personal computer 3 to realize various functions. Especially, in the case of the present embodiment, the content management application 30a is stored for the management of content data as described above with reference to FIG. 1. It should be noted that the functional operations to be realized by the content management application 30a will be described later.

An input block 25 is a keyboard and a mouse or a remote commander or others not shown arranged on the personal computer 3, through which the user performs various operations and enters data. The information entered through the input block 25 is processed by an input processing block 24 in a predetermined manner, the resultant information being transmitted to the CPU 21 as the input of an operation or data. In response to the entered information, the CPU 21 executes necessary computation and control.

A media drive 29 provides a drive functional block for driving recording media including optical disks, such as CD, MD (Mini Disc, or magneto-optical disk), CD-R (Recordable), CD-RW (ReWritable), DVD (Digital Versatile Disc), DVD-R, and DVD-RW, and memory cards (or semiconductor memory devices as removable media), for example. The media drive 29 is configured to execute recording and reproducing operations on these recording media. For example, so as to cope with each CD-type disk media, such as the optical disk 100 of the present embodiment, the media drive 29 is configured by an optical head, a spindle motor, a reproduced signal processing block, a servo circuit, and so on.

A drive control block 28 controls a recording/reproducing operation and access operation, for example, of a recording media loaded on the media drive 29. For example, if the user performs an operation for reproducing a recording media through the input block 25, the CPU 21 issues a command for the reproduction of the recording media to the drive control block 28. In response, the drive control block 28 controls the media drive 29 so as to execute an access operation and a reproducing operation. The media drive 29 transmits the reproduced data to the bus 36 through the drive control block 28.

Under the control of the CPU 21, an audio data processing block 33 executes sound field processing, such as equalizing, volume control, D/A conversion, and amplification, for example, as occasion demands on the entered audio data and outputs the processed audio data through a loudspeaker block 34. For example, in the reproduction of the audio data read by the media drive 29 or the audio data (or the content data) stored in the HDD 30, the audio data is processed by the audio data processing block 33 and the processed audio data is outputted from the loudspeaker block 34.

It should be noted that the content data 30b to be stored in the HDD 30 is sometimes compressed by a predetermined data compression algorithm. If the content data 30b is compressed, the content data 30b is decompressed by a compression/decompression block 35 to be described later and the decompressed content data 30b is supplied to the audio data processing block 33.

A display monitor 27 is a display device, such as a liquid crystal panel for example and displays various kinds of information for the user. For example, when the CPU 21 supplies display information according to various operation statuses, input statuses, and communication statuses to a display processing block 26, the display processing block 26 drives the display monitor 27 on the basis of the supplied display information to execute a display operation. If video data is reproduced from a recording media loaded on the media drive 29 or from the HDD 30, the display processing block 26 execute signal processing on the reproduced data and drives the display monitor 27 on the basis of signals obtained by this processing, thereby executing a video display operation.

Under the control of the CPU 21, a communication processing block 31 executes the encoding of transmission data and the decoding of reception data. A network interface 32 transmits the encoded transmission data to a predetermined device, the server apparatus 4 for example, via the network 5 shown in FIG. 1. Also, the network interface 32 passes signals supplied from an external device, such as the server apparatus 4 for example, to the communication processing block 31. The communication processing block 31 transfers the supplied information to the CPU 21.

The compression/decompression block 35 compresses audio data by a predetermined data compression algorithm and decompresses compressed data by a predetermined data decompression algorithm. In the present example, the compression/decompression block 35 is configured as hardware; however, the functional operation may be implemented by the software processing by the CPU 21.

It should be noted that the configuration of the personal computer 3 is not restricted to that described above, so that any of various other configurations are possible. For example, a configuration is also possible in which terminals for the connection of a microphone and an external headphone, video input/output terminals corresponding to DVD recording/reproduction, a line connection terminal, and an SPDIF terminal are arranged.

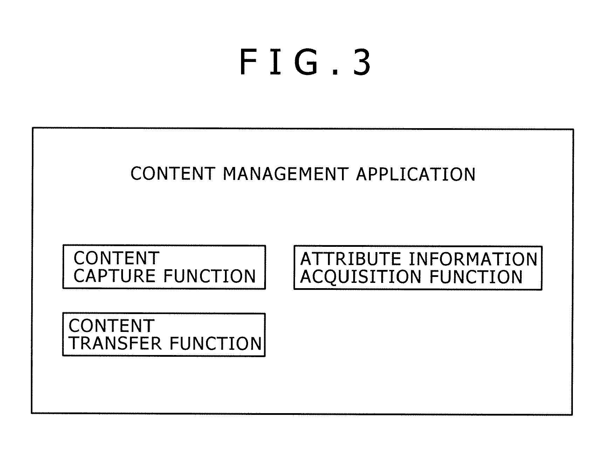

The following describes functions that are realized by the above-mentioned content management application 30a with reference to FIG. 3. It should be noted that, in FIG. 3, of the functions to be realized by the content management application 30a, the functions associated with the realization of operations practiced as embodiments of the invention are described and the description of the other functions is skipped.

As shown in FIG. 3, the main functions to be realized by the content management application 30a include a content capture function, an attribute information acquisition function, and a content transfer function.

### [Content capture function]

The content capture function captures content data from the optical disk 100 to the HDD 30. To be more specific, as this content capture function, the CPU 21 issues a command to the drive control block 28 for reading content data when the optical disk 100 is loaded on the media drive 29 and a content data capture command is given by the user. In this operation, the CPU 21 supplies the content data read as commanded to the compression/decompression block 35 to record the compressed data to the HDD 30. The content capture function can also select tracks to be captured from the content data recorded to the optical disk 100 in units of pieces of music (or tracks).

### [Attribute information acquisition function]

The attribute information acquisition function acquires the attribute information of content data from the music information database 4a in the server apparatus 4 connected to the personal computer 3 via the network 5 and manages the acquired attribute information by relating with that content data. In acquiring attribute information, when a command for capturing content data from the loaded optical disk 100 for example comes, the CPU 21 generates the above-mentioned unique code from the TOC data (the number of tracks or pieces of music, the address of each track (or the absolute time information), and a total play time) of the loaded optical disk 100. At the same time, the CPU 21 issues a command to the communication processing block 31 to establish connection with the server apparatus 4. As described before, the music information database 4a stores the attribute information as related with the unique code of each title, the attribute information being for each track to be recorded to the CD of that title. The CPU 21 issues a command to the connected server apparatus 4 along with this unique code, thereby directing the server apparatus 4 to search the music information database 4a by use of this unique code as a search condition. In response, the server apparatus 4 returns the attribute information for each track related with this unique code and stored in the server apparatus 4, upon which the personal computer 3 acquires the attribute information corresponding to each piece of content data recorded to the loaded optical disk 100. Then the CPU 21 generates (or updates) content management information 30c such that each piece of content data (or each track) captured from the optical disk 100 by the above-mentioned content capture function is managed as related with this acquired attribute information, thereby managing the content data.

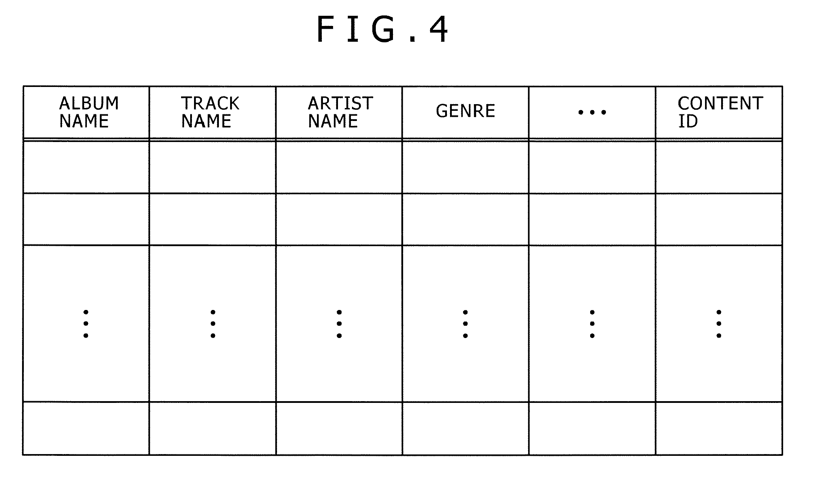

Referring to FIG. 4, there is conceptually shown a data structure of the content management information 30c that is generated in the above-mentioned case. As shown, the attribute information that is related with each piece of content data in the present embodiment includes track name, album name, artist name, and genre. The information about track name is attached to content data on a track basis, thereby indicating the information about the name of music. The information about album name is indicative of the name of a music album in which music is contained as tracks (there may be a single-track album). The information about artist name is indicative of the name of artist who sings, plays, composes, writes, and/or produces each track. The information about genre is indicative of the name of genre to which that music belongs (pops, rock, jazz, or Japanese ballad, for example). It should be noted that, although not shown, the actual genre information also includes the information about a track number indicative where that music is located in a particular album.

The CPU 21 generates the content management information 30c such that the information about content ID is related with these pieces of attribute information as shown. The content ID is an identifier (or identification information) for uniquely identifying each content data on a track basis stored in the HDD 30. Namely, the correlation between these content ID and attribute information realizes the correlation between each track and each piece of attribute information.

### (2) Content transfer function:

Referring to FIG. 3, the content transfer function transfers (or copies) each piece of content data stored in the HDD 30 as the content data 30b to the recording/reproducing apparatus 2 shown in FIG. 1 along with the content management information 30c. When the personal computer 3 is connected to the recording/reproducing apparatus 2 via a USB cable to enable data communication with the recording/reproducing apparatus 2 via the USB interface 23, the CPU 21 sequentially reads the content data and the content management information 30c from the HDD 30 and transfers these data and information to the recording/reproducing apparatus 2 via the USB interface 23 and, at the same time, directs the recording/reproducing apparatus 2 to record these data and information. Consequently, a database in which a database and attribute information correlation is stored is formed also on the recording/reproducing apparatus 2 as with the personal computer 3.

It should be noted that, of all pieces of content data stored in the HDD 30, the selected content data (or tracks) can be transferred to the recording/reproducing apparatus 2 in this content transfer function. In this case, the content management information 30c that is associated with the content data to be transferred is transferred to the recording/reproducing apparatus 2.

### (3) Configuration of reproducing apparatus:

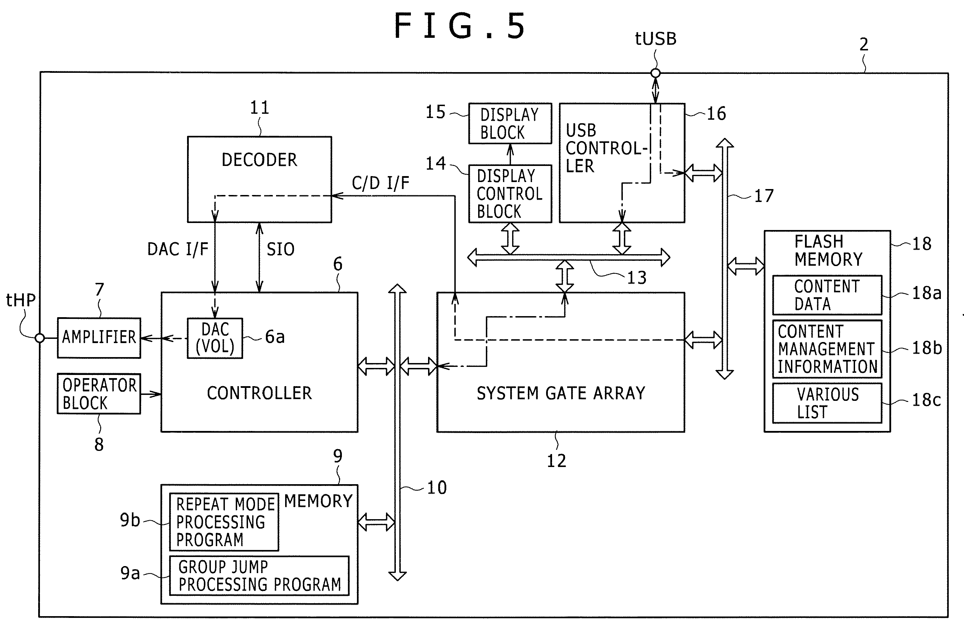

Referring to FIG. 5, there is shown a block diagram illustrating an exemplary internal configuration of the recording/reproducing apparatus 2 shown in FIG. 1. The recording/reproducing apparatus 2 has a flash memory 18 that is a recording media for storing content data copied from the personal computer 3, for example. In this case, the storage capacity of the flash memory 18 is about several hundred MB (megabytes) to several GB (gigabytes), for example.

In FIG. 5, a controller 6, configured by a microcomputer based on a ROM, a RAM, and a CPU, controls the recording/reproducing apparatus 2 in its entirety and executes computation processing as instructed by a started up program. For example, the controller 6 controls the input/output operation for the user and the data recording/reproducing processing on the flash memory 18. In this case, the controller 6 also has a D/A conversion function as a DAC (D/A converter) 6a and a volume control function.

The controller 6 is connected to an amplifier 7 and an operator block 8. The amplifier 7 amplifies the audio data that is D/A-converted and volume-controlled by the D/A function based on the DAC 6a and the volume control function, respectively, and supplies the amplified audio data to a headphone terminal tHP. The operator block 8 has various operator controls arranged on the outside of the case of the recording/reproducing apparatus 2 for the operator to operate. When operation signals are entered through these operator controls, the controller 6 controls component blocks such that operations corresponding to these operation signals are executed. Consequently, the user can enter commands and data through the operator block 8 to make the recording/reproducing apparatus 2 execute desired operations.

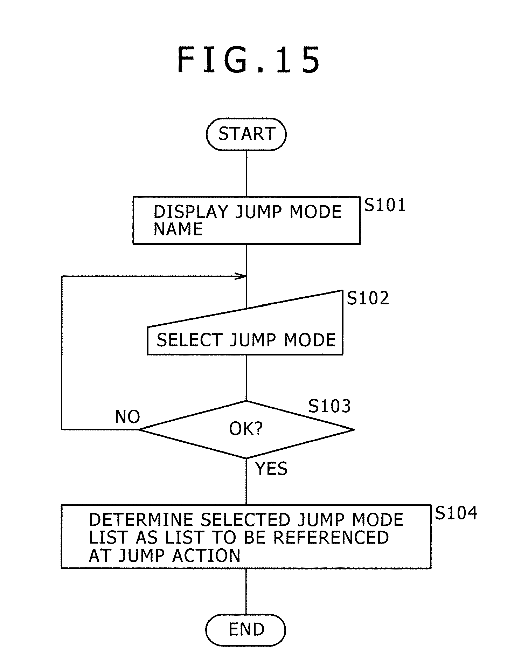

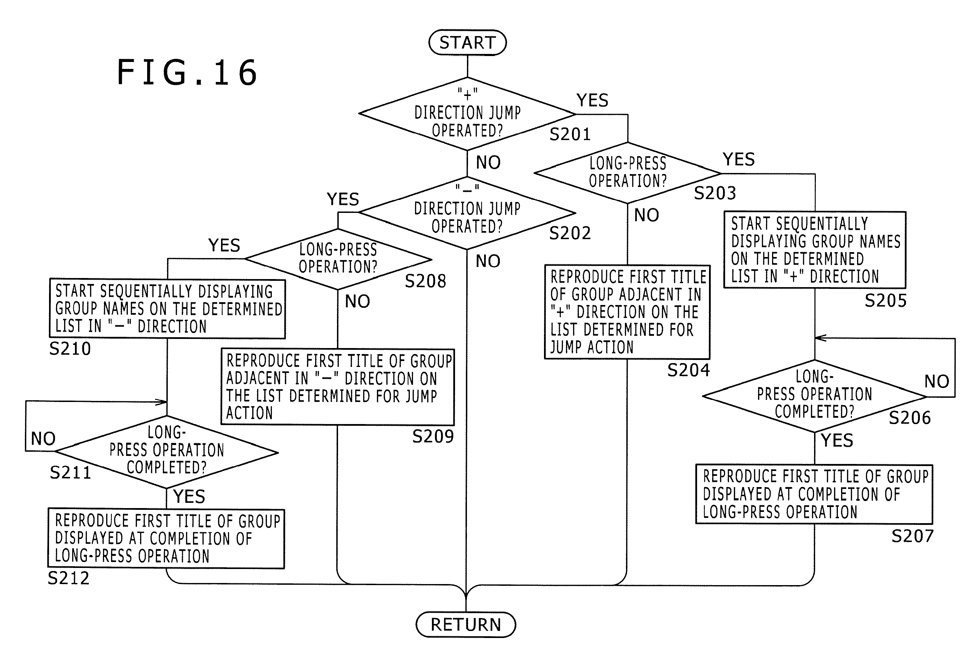

The controller 6 is also connected to a memory 9 through a first bus 10. The memory 9 is a non-volatile memory, such as a flush memory. The memory 9 stores coefficients for use in various computations by the controller 6 and parameters for use by programs, for example. In the present embodiment, especially, the memory 9 stores a group jump processing program 9a for executing processing operations to be described later with reference to FIGS. 15 and 16. The memory 9 also stores a repeat processing program 9b for setting a repeat mode. It should be noted that the group jump processing program 9a may alternatively stored in the flash memory 18 or the ROM of the controller 6.

The controller 6 still also connected to a decoder 11 through a DAC I/F and an SIO shown. the decoder 11 decodes or decompresses the audio data compressed by a predetermined algorithm. The decoder 11 also executes audio signal processing, such as surround processing, on the audio data decompressed by this decompression processing. The audio data outputted from the decoder 11 is supplied to the controller 6 via the DAC I/F to undergo the D/A conversion processing and the volume control processing as the above-mentioned DAC 6a. The audio data thus processed is then supplied to the amplifier 7. The amplified audio data is then supplied to the headphone terminal tHP. It should be noted that the controller 6 also gives various control commands to the decoder 11 through the SIO shown.

The controller 6 is also connected to a system gate array 12 via the first bus 10. The system gate array 12 is an LSI (Large Scale Integration) for controlling the transfer of various data such as audio data and commands. The system gate array 12 is connected to the decoder 11 via a C/D I/F shown. The system gate array 12 is also connected to a display control block 14 and a USB controller 16 via a second bus 13. Further, the system gate array 12 is connected to the flash memory 18 via a third bus 17.

A display block 15 is a display device based on an organic EL (Electro Luminescence) display or a liquid crystal display, for example, that visually presents various kinds of information to the user. The display control block 14 drives the display block 15 on the basis of the display data supplied from the controller 6 via the first bus 10, the system gate array 12, and the second bus 13, thereby executing display operations.

The USB controller 16 is arranged to execute data communication with an external device (in this case, the personal computer 3) connected via a USB cable connected to a tUSB terminal. To be more specific, the USB controller 16 encodes transmission data and decodes reception data in accordance with a USB communications scheme, thereby executing data communication with the connected external device. It should be noted that the recording/reproducing apparatus 2 of the present embodiment is compliant with the USB mass storage class (MSC) standard. Consequently, when the recording/reproducing apparatus 2 is connected to the personal computer 3 via a USB cable, the recording/reproducing apparatus 2 is recognized by the personal computer 3 as an externally attached storage device.

As understood from the description made so far, the content data and the content management information 30c (or part thereof) supplied from the personal computer 3 is entered in the recording/reproducing apparatus 2 via the USB controller 16. When these data are received from the personal computer 3, the USB controller 16 transfers the received data to the flash memory 18 via the third bus 17 to write the data to the flash memory 18. In FIG. 5, the content data and the content management information thus stored in the flash memory 18 are content data 18a and content management information 18b as shown. It should be noted that various lists 18c to be recorded to the flash memory 18 at this time will be described later.

When the above-mentioned data are transferred from the personal computer 3 to the recording/reproducing apparatus 2, various commands are also transferred. These commands are transferred by the USB controller 16 from the personal computer 3 to the controller 6 via the second bus 13, the system gate array 12, and first bus 10 in this sequence. The controller 6 interprets these commands. In response to the results of the interpretation, the controller 6 executes necessary processing.

When the content data 18a stored in the flash memory 18 is reproduced the content data (or the compressed audio data) read from the flash memory 18 as instructed by the controller 6 is supplied to the system gate array 12 via the third bus 17. The system gate array 12 supplies the received content data that is the compressed audio data to the decoder 11 via the C/D I/F. The decoder 11 decompresses the supplied compressed content data and executes predetermined audio signal processing on the decompressed audio data, supplying the resultant decompressed audio data to the controller 6 via the DAC I/F. The controller 6 executes D/A conversion processing as the above-mentioned DAC 6a and volume control processing on the received audio data and supplies the processed audio data to the amplifier 7. The amplifier 7 amplifies the received audio data and supplies the amplified audio data to the headphone terminal tHP.

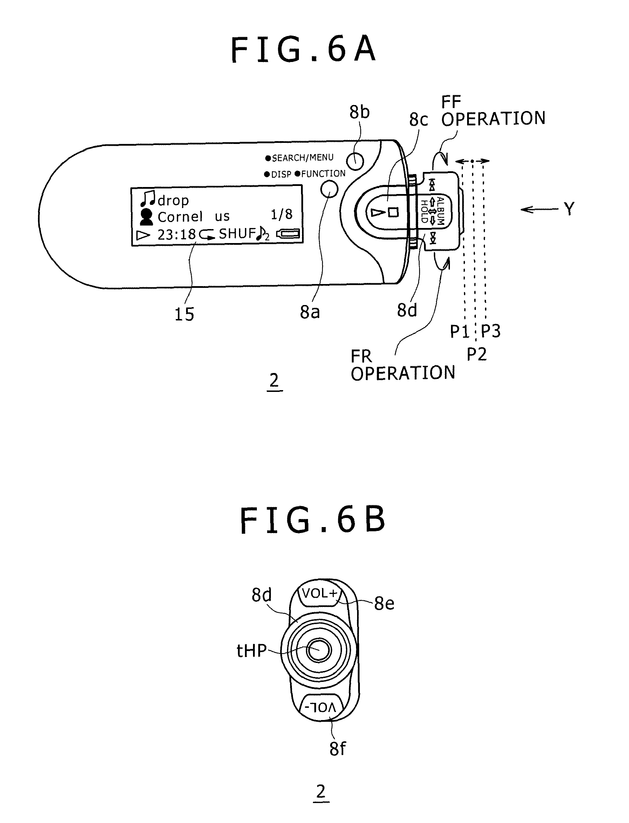

Referring to FIGS. 6A and 6B, there is shown external views of the recording/reproducing apparatus 2 so as to describe main operator controls arranged on the operator block 8 described with reference to FIG. 5. To be more specific, FIG. 6A shows a front view of the recording/reproducing apparatus 2. FIG. 6B shows an external view of the recording/reproducing apparatus 2 in the direction of arrow Y shown in FIG. 6A. It should be noted that FIG. 6A also shows the display block 15 described with reference to FIG. 5, which is arranged to expose outside the housing of the recording/reproducing apparatus 2 as shown. In this case, the headphone terminal tHP shown in FIG. 5 is arranged at a center portion of a shuttle switch 8d as shown in FIG. 6B.

As seen from FIGS. 6A and 6B, the recording/reproducing apparatus 2 has a DISP/FUNC key 8a, a SEARCH/MENU key 8b, a PLAY/STOP key 8c, the shuttle switch key 8d, a VOL+ key 8e, and a VOL- key 8f. The DISP/FUNC key 8a is operated to switch between display information shown on the display that is the display block 15 and between various functions. The SEARCH/MENU key 8b is operated to call the search mode for searching the content data stored in the flash memory 18 for desired content data on an album basis or a track basis and call a menu screen for making various settings on the recording/reproducing apparatus 2. The PLAY/STOP key 8c is operated to start or stop the reproduction of content data and enter each selected item.

The shuttle switch 8d provides a slide operation to move to one of three positions P1, P2, and P3 (namely, a 3-slide operation) shown in FIG. 6A and a 2-direction rotational operation in the directions indicated by arrows shown. In one direction, the shuttle switch 8d is rotated to effectuate an FF (Fast Forward) operation, in which a forward feed of tracks being reproduced or a forward feed of various selections is instructed. In the other direction, the shuttle switch 8d is rotated to effectuate an FR (Fast Rewind) operation, in which cueing of tracks being reproduced or a reverse feed of various selections is instructed.

In the above-mentioned 3-slide operation of the shuttle switch 8d, the position of P1 shown is indicative of a hold operation, in which all other operations are not accepted. The position of P2 is a neutral position, in which, when the shuttle switch 8d is at this position and content data is being reproduced, the above-mentioned FF operation causes the forward feed of tracks being reproduced and the FR operation causes the cueing (or the reverse feed) of tracks being reproduced. It should be noted that the PS position is also called as a track position.

The position of P3 is an album position. When the shuttle switch 8d is slid to the P3 position and content data is being reproduced, the FF operation causes a forward feed of tracks on an album basis. Namely, a forward feed is directed to a start track in an album determined beforehand to be next to an album to which a track being reproduced belongs. An FR operation in this case causes a reverse feed on an album basis. Namely, a reverse feed is direction to the start track in an album that is sequentially reproducibly before an album to which the track being reproduced belongs. It should be noted that, in the present embodiment, an FF operation or an FR operation at the album position also enables a jump action on an artist basis, in addition to an album jump, which will be described later.

The VOL+ key 8e and the VOL- key 8f shown in FIG. 6B are controls for directing the adjustment of sound volume. The VOL+ key 8e increases sound volume, while the VOL- key 8f decreases sound volume.

### (4) Search function:

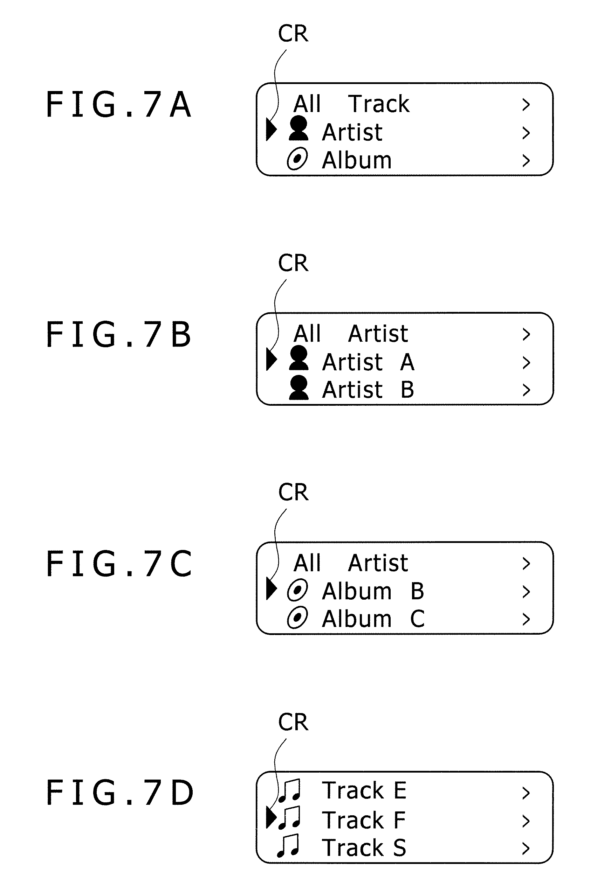

A portable audio player (and/or recorder) configured to store a large number of pieces of music in a recording media, such as the recording/reproducing apparatus 2 practiced as one embodiment of the invention is provided with a search function that enables the efficient searching for desired music tracks in a limited display space. The recording/reproducing apparatus 2 is also provided with such a search function. The following describes user operation procedures for actually searching for music by the search function as described above and actions to be taken by the recording/reproducing apparatus 2 with reference to FIGS. 7A to 8C. It should be noted that FIGS. 7A to 8C illustrate transitions of the contents of display on the display block 15 in response to the inputs by the user.

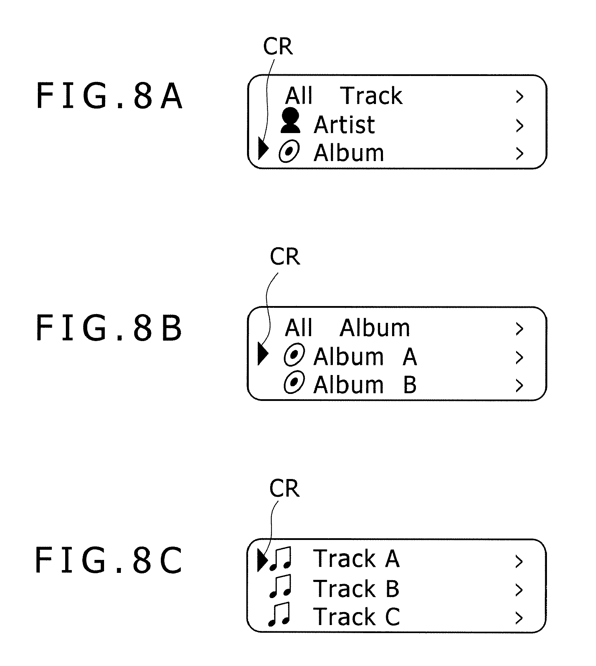

The search function in this case includes album search in which a list of album is displayed to search albums for desired tracks and artist search in which a list of artists and a list of album belonging to a designated artist are displayed to search for desired tracks. FIGS. 7A to 7D show screen transitions on the display block 15 that take place in the artist search mode. FIGS. 8A to 8C show screen transitions on the display block 15 that takes place in the album search mode.

In FIGS. 7A to 7B, in order to execute a search operation, the user presses the SEARCH/MENU key 8b shown in FIG. 6A, upon which a search menu screen as shown in FIG. 7A is displayed. As shown, the search menu screen shows at least items "All Track", "Artist", and "Album" and cursor CR for designating these items. Item "All Track" is used to search a list of all tracks stored in the flash memory 18 for desired tracks. Item "Artist" is used to perform the above-mentioned artist search. Item "Album" is used to perform the above-mentioned album search.

The user can execute the above-mentioned FF operation and/or FR operation described with reference to FIGS. 6A and 6B to move cursor CR to select any of the above-mentioned items. Then, pressing the PLAY/STOP key 8c, the user can enter the item designated by the cursor CR.

On the search menu screen shown in FIG. 7A, in order to search for a track by the artist search, the user selects and enters item "Artist". In response, item "All Artist" and a list of the information of all artist names are displayed on the display block 15 as shown in FIG. 7B.

It should be noted that, FIG. 7B shows two artist names because the display block 15 can display three lines of information; therefore, other artist names can be shown by moving cursor CR further down from the bottom of the screen (in this case, a FR operation). This is also applicable to each of "List Display" and "List Screen" to be described later. It should be noted that "All" as used in "All Artist" denotes all artists in a range stored in the flash memory 18.

In FIG. 7B, in this case, by moving cursor CR by operating executing FF operation/or FR operation, the user can press the PLAY/STOP key 8c to select and enter a desired artist from the list of artists.

If an artist has been entered from the list of artists shown in FIG. 7B, "All Album" as shown in FIG. 7C and a list of albums associated with the entered artist are displayed. Then, the user selects and enters a desired album from the displayed list.

If one album has been entered from the above-mentioned album list, a list of tracks contained in the entered album is displayed as shown in FIG. 7D. The user can designate a desired track from the list of tracks names shown in FIG. 7D by executing FF operation/FR operation and pressing the PLAY/STOP key 8c, thereby directing to start reproducing the selected track.

In this case, a range of reproduction covers all tracks contained in the specified album of the entered artist. It should be noted that the reproduction range as used herein denotes a range in which reproduction is made; for example, when the reproduction of the last track (namely, the last track in the list) in the reproduction range has been completed, the reproduction stops and/or the reproduction of the start track starts.

Thus, the artist search allows the searching for a desired track by searching an artist list, an album list of the retrieved artist, and an track list of the retrieved album in this order.

If the reproduction of music has been started by following the above-mentioned artist search, the reproduction range is set into the album entered by the entered artist. Namely, the search mode as described above is configured also to function as a mode for executing reproduction by limiting the content reproduction range to a range finally obtained by searching.

It should be noted that item "All Track" displayed on the search menu screen shown in FIG. 7A is an item for selecting a desired track from a list of all tracks. Although not shown, if item "All Track" is selected and entered, a list of track names is displayed on the display block 15. In this case, the track names are listed such that the tracks are grouped by album name. Namely, the track names grouped by a same album are arranged in the list as one group. The tracks are arranged in the same album in the order of track numbers in that album. Further, the arrangement for each album is in a sequence of the character codes of album names (hereafter referred to as an album name sequence).

If a track has been selected and entered from the track list screen after the selection and entering of this "All Track" and the reproduction of this selected track is started, the range of reproduction is all listed tracks. Namely, all tracks stored in the flash memory 18 as the content data 18a are subject to reproduction. The sequence of reproduction follows the above-mentioned list.

When a track selected from item "All Track" is being reproduced and the FF operation/FR operation is executed at the album position described with reference to FIGS. 6A and 6B, the start track in the album arranged adjacent to the album to which the track being reproduced belongs is reproduced on the basis of a list of tracks arranged for each album as described above. Consequently, in response to the FF operation/FR operation at the album position when a track has been reproduced from "All Track" search, an album jump action is executed.

If item "All Artist" is selected and entered in FIG. 7B, the track names of all tracks to be stored as the content data 18a are listed in the sequence of artist names (at this time, the tracks in each artist are displayed in the sequence of album names). When one of the tracks is selected and entered from this list of track names, the reproduction is executed in the sequence of reproduction based on this track list and in a range of that list (namely, all tracks). Then, if an FF operation/FR operation is executed at the album position at that time, then the start track in the artist arranged adjacent to the artist to which the track being executed belongs on the basis of the list of all track in the sequence of artist names as described above. Namely, in response to an FF operation/FR operation at the album position during the track reproduction in accordance with item "All Artist", an artist jump action is executed.

Also, if item "All Album" shown in FIG. 7C is selected and entered, the track names of all tracks in the artist entered in FIG. 7B are sorted in the sequence of album names to be displayed in a list. At this moment, the range of reproduction covers all tracks of the entered artist thus listed. The sequence of reproduction is the sequence of listed tracks. If an FF operation/FR operation is executed while track reproduction is being executed in accordance with item "All Album" and if there are two or more albums of the entered artist, an album jump action is executed between these albums. This is because, in this case, the range of reproduction is based on a list of tracks sorted by album name for the entered artist as described above.

When the user presses the SEARCH/MENU key 8b while a track is being reproduced in the search mode as described above, the user can follow the search steps that are reverse to those followed at the time of the search operation. For example, if a track is being reproduced after the screen transitions shown in FIGS. 7A to 7D as the artist search operation, the user can display a screen one layer higher in the order of the track list screen shown in FIG. 7D, the album list screen shown in FIG. 7C, and the artist list screen shown in FIG. 7B every time the user presses the SEARCH/MENU key 8b. Consequently, the user can search for tracks again by newly entering an album and/or an artist. This holds the same with an album search operation described below.

Referring to FIGS. 8A to 8C, there are shown screen transitions that take place at the time of an album search operation. In order to execute an album search operation, the user moves cursor CR to "Album" on a search menu screen shown in FIG. 8A and presses the PLAY/STOP key 8c. Then, item "All Album" and all album names are listed on the display block 15 as shown in FIG. 8B.

When one album is selected and entered from the above-mentioned album list as shown in FIG. 8B, then a list of track names contained in the entered album is displayed as shown in FIG. 8C. By executing an FF operation/FR operation from the track name list shown in FIG. 8C and pressing the PLAY/STOP key 8c, the user can select and enter a desired track and direct to start reproducing the entered track. In this case, the range of reproduction is the listed tracks, namely, all tracks contained in the entered album. Thus, the album search operation allows the searching for each desired track in the order of an album list and then a track list in a selected and entered album.

It should be noted that, if item "All Album" is entered in the screen shown in FIG. 8B, the track names of all tracks stored as the content data 18a are sorted in the order of album names and the sorted track names are displayed in a list. Namely, when item "All Album" is selected, the same screen as that displayed when item "All Track" shown in FIG. 7A (FIG. 8A) is displayed. For this reason, in response to an FF operation/FR operation at the album position while a track is being reproduced from item "All Album", the reproduction of the start track in the album adjacent to the album to which the track being reproduced in the list belongs is started, thereby executing an album jump action. The content reproduction sequence at this moment is the same as the sequence in the list and the range of reproduction covers all tracks displayed in the list.

### (5) Group jump action practiced as one embodiment:

As seen from the description made above, the recording/reproducing apparatus 2 practiced as one embodiment of the present invention is provided with the search function for searching an artist list and an album list for desired tracks. On the other hand, the recording/reproducing apparatus 2 is provided with a group jump function for making a direct jump between predetermined groups, such as albums and artists, in response to a predetermined operation executed by the user.

In related-art technologies, a jump action in response to a jump operation executed by the user to effectuate the above-mentioned group jump is executed within a range specified as the range of reproduction. It should be noted that, if the range of reproduction is all tracks as with item "All Track" and these tracks are sorted by album name as described above, this related-art technique causes an album jump operation in response to a group jump operation by the user. However, if a track retrieved by album-searching an album list and then a track list is found being reproduced or a track retrieved by artist-searching an artist list, an album list and then a track list is found being reproduced, the range of reproduction is within an entered album, so that, if a group jump operation is executed by the user, no jump action between groups, such as albums and artists, will be executed.

However, if there are cases in which a jump can be executed and not as described above although the same group jump operation is executed by the user, the user may not make a distinction between these cases, being left at a loss.

In order to circumvent the above-mentioned problem, a configuration may be provided to enable a jump operation also if a track is reproduced by artist search or album search. Namely, in the case of album search, for example, a configuration may be provided that a jump can be made to the album adjacent to the album to which the track being reproduced belongs in the album name list displayed at the time of the search operation.

However, the user wants to make a jump on an artist basis after searching for a desired track by album search. If this user desire is satisfied by simply making a jump based on the list used at the time of search as described above, the degree of freedom of each jump action is minimized.

Consequently, in the present embodiment of the invention, a list for jump operations is separately generated in advance and the generated jump list is correlated with jump operations. When a jump operation is made by the user, the correlated jump list is referenced to execute a group jump action in accordance with the grouping and group arrangement sequence on the list.

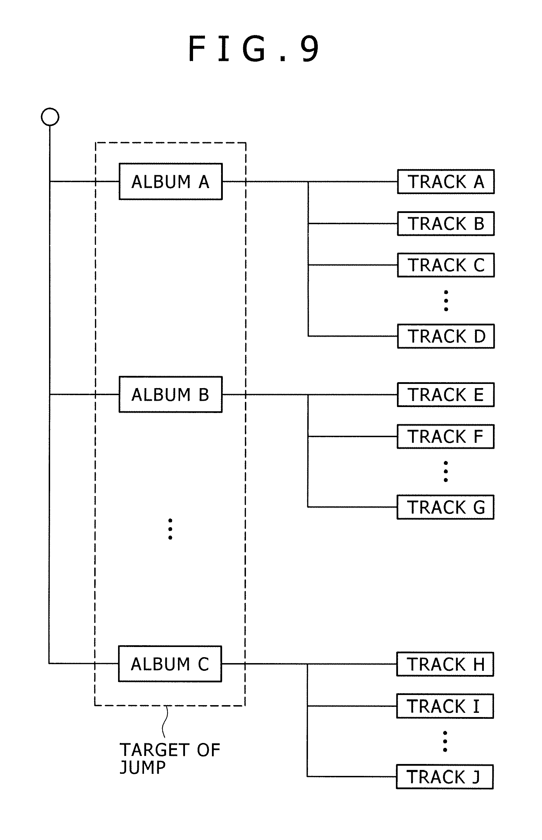

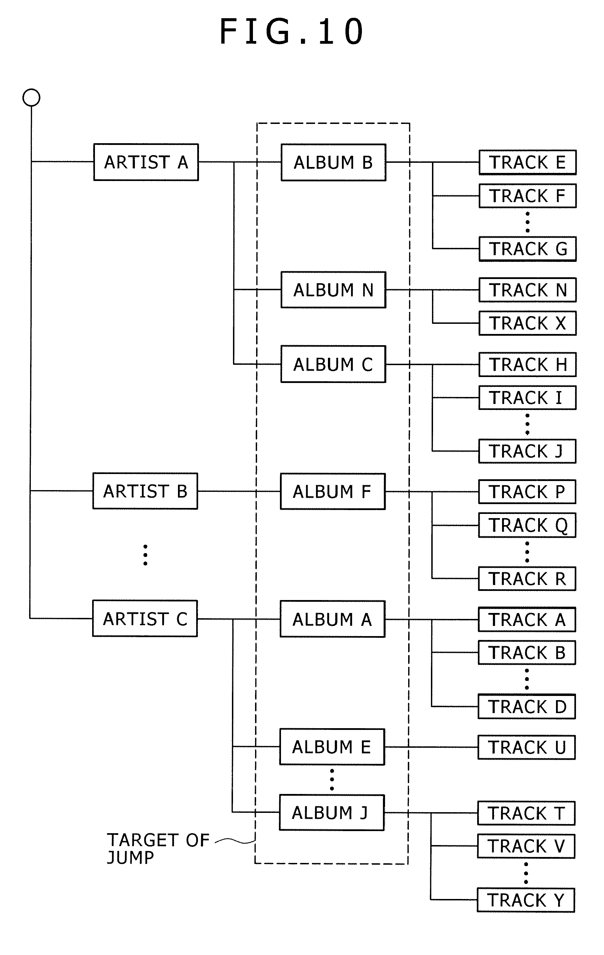

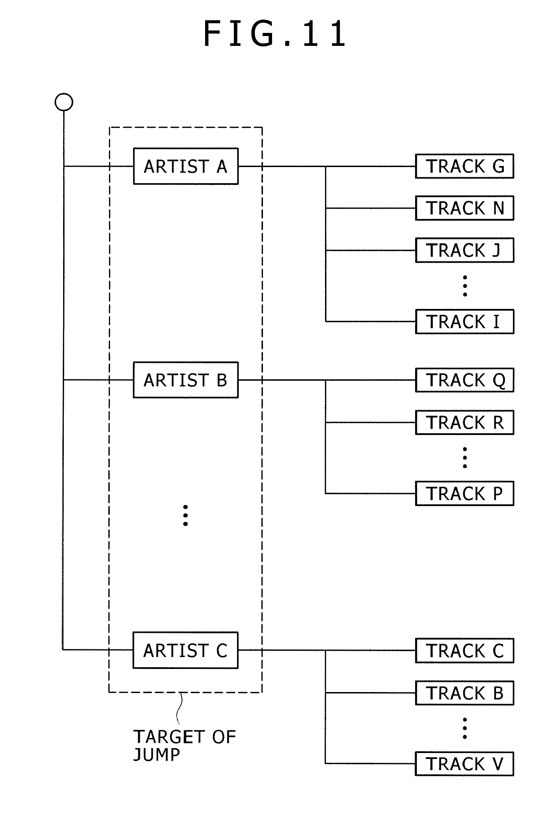

Now, referring to FIGS. 9 to 11, there are shown specific examples of jump lists to be generated in the above-mentioned case. FIG. 9 conceptually shows a structure of an album jump list. FIG. 10 conceptually shows a structure of an artist-sorted album jump list. FIG. 11 conceptually shows a structure of an artist jump list.

The album jump list shown in FIG. 9 is generated such that, first, all track names contained in the content management information 18b are classified album name as shown. In each album, the track names are arranged in a predetermined sequence. In this case, the arrangement of track names in each album matches the track numbers in that album.

The artist-sorted album jump list shown in FIG. 10 is generated such that all track names are classified by album name and all album names containing the tracks are classified by artist name. In each album, the track names are arranged in a predetermined sequence, such as track numbers, for example. In this case, the artist names, the top layer in the structure of this album jump list, are arranged by artist name (for example, by character code). The album names, below the artist names, are arranged by album name.

The artist jump list shown in FIG. 11 is generated such that all track names are arranged by artist name and, in each artist name, the track names are arranged by a predetermined sequence. In this case, the artist names in the upper layer are arranged by artist name and the track names therebelow are arranged by character codes indicative of album names or simply by track names (for example, character codes indicative thereof).

In the present embodiment, the lists shown in FIGS. 9 to 11 are generated by sorting the content management information 18b by the controller 6 of the recording/reproducing apparatus 2. To be more specific, in the case of the album jump list shown in FIG. 9, on the basis of the album name and track name information related with each content ID, a list is generated with the content IDs in the content management information 18b sorted into the arrangement shown in FIG. 9. Likewise, in the case of artist-sorted album jump list shown in FIG. 10, on the basis of the artist name, album name, and track name information in the content management information 18b, a list is generated with the content IDs sorted into the arrangement shown in FIG. 10. In the case of the artist jump list shown in FIG. 11, on the basis of the artist name and track name information (and the album name information if track names are to be sorted by album name) in the content management information 18b, a list is generated with the content IDs sorted into the arrangement shown in FIG. 11. Then, these generated lists are recorded to a required recording media, such as the flash memory 18, in advance. FIG. 5 shows the lists thus stored in the flash memory 18 as various lists 18c.

Generating the above-mentioned lists in advance can realize, in the case of the album jump list shown in FIG. 9 for example, a group jump action (namely, an album jump action) in accordance with the arrangement of the listed albums, for each group sorted by album name as indicated by "jump target" in the figure. Further, on the basis of the artist-sorted album jump list shown in FIG. 10, an album jump action is realized in accordance with the arrangement of albums for each group sorted by album name as indicated by "jump target" in the figure. Still further, on the basis of the artist jump list shown in FIG. 11, a group jump action (namely, an artist jump action) is realized in accordance with the arrangement of artists for each group sorted by artist name as indicated by "jump target" in the figure.

In addition, the present embodiment allows the user to preset any of the above-mentioned list-based jump actions in accordance with a group jump operation by the user. To be more specific, a jump mode selection screen is prepared that allows the user to selectively set a jump action based on one of the lists in accordance with a group jump operation. On this screen, the user selectively sets a jump action.

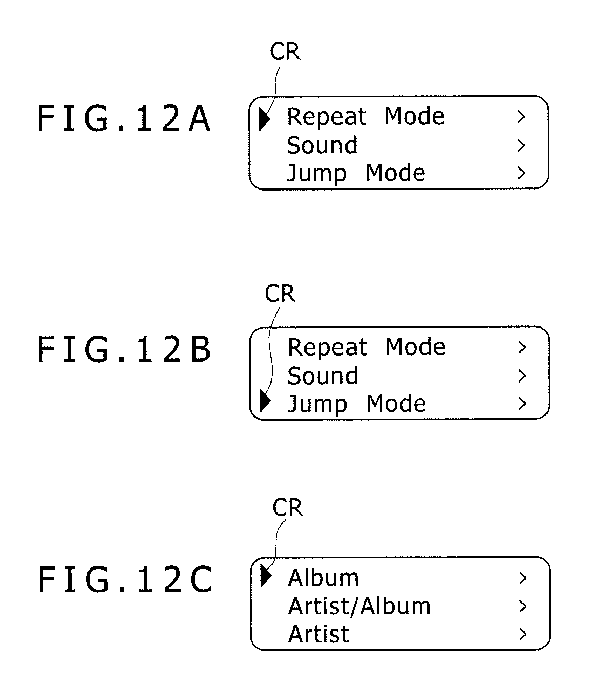

Referring to FIGS. 12A, 12B, and 12C, there is shown an example of the transitions of screens that are displayed on the display block 15 in accordance with operations done by the user. First, when selectively setting any of the above-mentioned jump actions, the user long-presses the SEARCH/MENU key 8b shown in FIG. 6A. Then, a setting menu screen shown in FIG. 12A is displayed on the display block 15. On this setting menu screen, a list of various setting items, such as "Repeat Mode", "Sound", and "Jump Mode" for example, are displayed as well as cursor CR for designating these setting items. In this case also, the user moves cursor CR by FF operation/FR operation and presses the PLAY/STOP key 8c, thereby entering a selected item. In setting a jump action on the setting menu screen shown in FIG. 12A, the user moves cursor CR to "Jump Mode" as shown in FIG. 12B and selects this mode, thereby entering the selected item.

When item "Jump Mode" is selected and entered, then, items "Album", "Artist/Album", and "Artist" indicative of jumps actions are displayed along with cursor CR as shown in FIG. 12C, as a jump mode select screen. It should be noted that "Album" is an item indicative of a jump action based on the above-mentioned album jump list, "Artist/Album" is an item indicative of a jump action based on the artist-sorted album jump list, and "Artist" is an item indicative of a jump operation based on the artist jump list. On this selection screen, the user can selectively set any desired jump action as a jump action to be executed in accordance with a group jump operation by the user.

If the selected item is "Album", the album jump list is set in the recording/reproducing apparatus 2 as a list to be referenced to execute a jump action in accordance with a group jump operation. Namely, a group jump operation is related with the album jump list. Consequently, in response to a group jump operation, a jump action based on the album jump list can be executed as the album jump mode. To be more specific, if a group jump operation is done by an FF operation (or a "+" direction operation) at the album position, then the start track in the album arranged next to the album to which the track being reproduced belongs in the album jump list is reproduced. If a group jump action is done by an FR operation (or a "-" direction operation), then the start track in the album arranged before the album to which the track being reproduced belongs in the album jump list is reproduced.

It should be noted that if the album to which the track being reproduced belongs is the last album on the list when a "+" direction operation has been executed, then the above-mentioned "album arranged next" is the start album on the list. If the album to which the track being reproduced belongs is the start album on the list when a "-" direction operation has been executed, the above-mentioned "album arranged before" denotes the last album on the list. This holds with any jump actions based on the artist-sorted album jump list. This also holds with a jump action based on the artist jump list except that "Album" is replaced by "Artist".

If the selected item is "Artist/Album", the artist-sorted album jump list is set as the list to be referenced when executing a jump action in accordance with a group jump operation. Namely, a group jump operation is related with the artist-sorted album jump list. Consequently, in response to a group jump operation, a jump action based on the artist-sorted album jump list is executed as the mode of album jump by artist. In this case also, in response to a "+" direction jump operation, the start track in the album arranged next to the album to which the track being reproduced belongs in the artist-sorted album jump list is reproduced. In the case of a "-" direction operation, the start track in the album arranged before the album to which the track being reproduced belongs in the artist-sorted album jump list is reproduced.

If the selected item is "Artist", the artist jump list is set as a list to be referenced when executing a jump action in response to a group jump operation. Namely, a group jump operation is related with the artist jump list. Consequently, in response to a group jump operation, a jump action based on the artist jump list by artist is executed as the artist jump mode. In this case also, in response to a "+" direction jump operation, the start track in the artist arranged next to the artist to which the track being reproduced belongs in the artist jump list is reproduced. In the case of a "-" direction operation, the start track in the artist arranged before the artist to which the track being reproduced belongs in the artist jump list is reproduced.

As described above and according to the present embodiment of the invention, the group jump list generated in advance can be related with group jump operations done by the user. Namely, regardless of searched range of reproduction, referencing a separate list for group jump operations allows the execution of a group jump action also when the range of reproduction has been narrowed down to one album or one artist for example by a search operation. This ability of a group jump action also when the range of reproduction has been narrowed down to one album or one artist by a search operation can prevent the occurrence of a situation in which a jump action is executed or not executed in response to a group jump operation by the user, thereby realizing an excellent user interface that excludes user confusion in search operation.

Further, separately generating a group jump list and relating the generated list with group jump operations in advance can expand the degree of freedom in group jump such that, although track reproduction has been started by album search for example, a group jump action can be executed on an artist basis.

Still further, generating a plurality of lists as with the present invention in advance can further expand the degree of freedom in group jump by selecting any of the lists that is applied to group jump actions.

For the group jump action in this case, it is also practicable to sequentially display group names on the list and then select a desired group therefrom as shown below for example, in addition to starting a track in an adjacent group on the list immediately in response to a group jump operation done by the user.

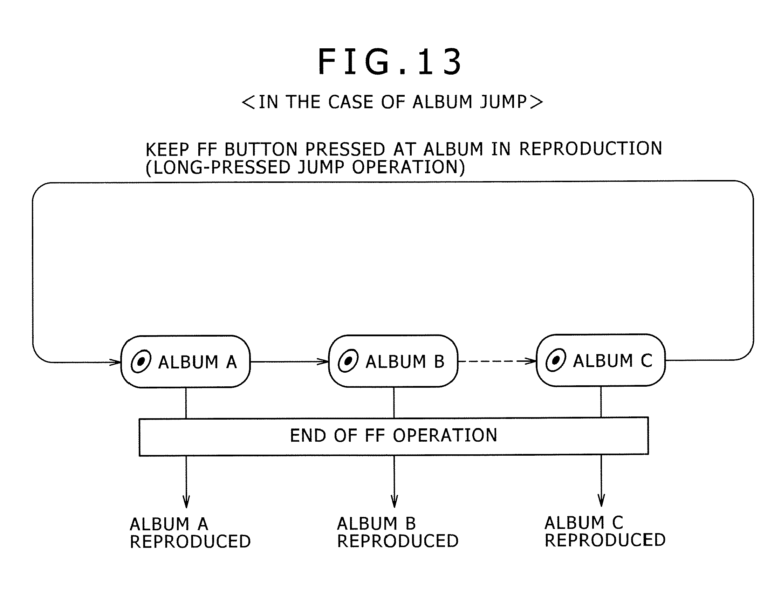

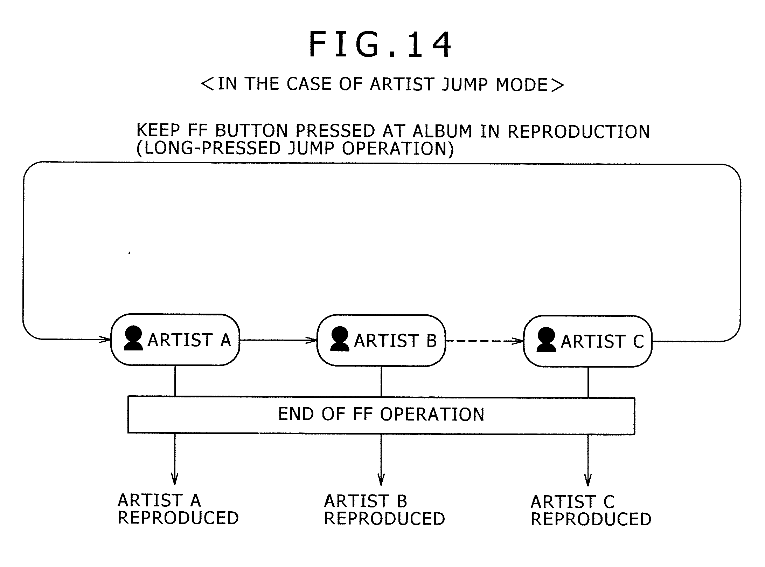

Referring to FIGS. 13 and 14, there are shown examples of sequential display screens described above. FIG. 13 shows a sequence display example in the album jump mode. FIG. 14 shows a sequential display example in the artist jump mode. It should be noted that the sequential display example in the artist-sorted album jump mode is the same as that in the album jump mode shown in FIG. 13, so that the description of the sequential display example in the artist-sorted album jump mode is skipped.

First, in order to select a desired group by the above-mentioned sequential display, the user long-presses the FF at the album position during the reproduction of a track. Namely, the user keeps the FF pressed with the shuttle switch 8d shown in FIG. 6B set to the album position. Then, in the case of album jump mode shown in FIG. 13, the information of album names on the album jump list is sequentially display forward on the display block 15 while the FF is kept pressed.

In the above-mentioned operation, after the user releases the shuttle switch 8d (namely, the user ends the FF operation) upon displaying of the information about the desired album name, the user can direct the reproduction of the display album. Namely, when the FF operation has been completed, the recording/reproducing apparatus 2 starts reproducing the start track in the album under the album displayed (namely, selected to be displayed) on the display block 15 at the time of the completion of the FF operation on the basis of the information about the displayed album.

In the case, when then FR is long-pressed at the position of the album being reproduced, album names on the album list are sequentially displayed in a reverse manner. Also, in this case, when the FR operation has been completed, the reproduction of the start track under the album name on the list selected at that moment. It should be noted that an FF operation/FR operation that is kept executed at the position of an album being reproduced for directing the above-mentioned sequential display is also referred to as a long-pressed jump operation.

It should be noted that, in the artist-sorted album jump mode, the same action as described above is taken on the basis of the contents of the artist-sorted album jump list. As described above, the sequential display example in the artist-sorted album jump mode is the same as shown in FIG. 13.

When a long-pressed jump operation is executed by the user by executing an FF long-pressed operation in the artist-sorted jump mode shown in FIG. 14, the artist names are sequentially selected in the forward direction as shown on the basis of the contents of the artist jump list and the selected artist names are sequentially displayed on the display block 15. In this case also, when the FF operation has been completed, the reproduction of the start track under the artist name on the list selected at that moment is started. When a long-pressed jump operation is executed by executing an FR long-pressed operation, the artist names on the artist jump list are sequentially displayed in the reverse order. When the FR operation has been completed, the reproduction of the start track under the album name on the artist jump list selected at that moment is started.

The ability of the above-mentioned sequential display actions allows the presentation of jump-enabled group candidates to the user to let the user select any desired groups.

### (6) Processing action:

The following describes a processing operation that is executed to realize a group jump action as one embodiment of the invention with reference to flowcharts shown in FIGS. 15 and 16. It should be noted that the processing operations shown in these figures are executed by the controller 6 shown in FIG. 5 on the basis of the group jump processing program 9a stored in the memory 9.

FIG. 15 shows a processing operation to be executed when selectively setting the jump mode as described above with reference to FIGS. 12A to 12C. It should be noted that, in FIG. 15, the display block 15 displays a processing operation to be executed after entering item "Jump Mode" on the setting menu screen shown above in FIG. 12B.

First, in step S101, jump mode name display processing is executed. Namely, when item "Jump Mode" has been entered as described above with reference to FIG. 12B, the processing for displaying a jump mode selection screen displaying a list of jump modes as described in FIG. 12C) is executed. To be more specific, screen data with at least items "Album", "Artist/Album", and "Artist" and cursor CR arranged is supplied to the display control block 14 to be displayed on the display block 15.

In step S102, jump mode selection processing is executed. Namely, on the displayed jump mode selection screen, processing for moving cursor CR in response to an FF/FR operation, for example, is executed as occasion demands. In step S103, it is determined whether an entering operation has been executed. To be more specific, it is determined whether the PLAY/STOP key 8c has been pressed. If the PLAY/STOP key 8c is found not pressed, then the procedure returns to step S102 to repeat the jump mode selection processing.

On the other hand, if the PLAY/STOP key 8c is found pressed in step S103, then the procedure goes to step S104 to determine a list of the determined jump mode list as a list to be referenced for a jump action. Namely, in accordance with the jump mode item selected in step S102 and entered in step S103, the list of that jump mode is determined as a list to be referenced when executing a jump action. To be more specific, as described above, if item "Album" is selectively entered, the album jump list is entered; if item "Artist/Album" is selectively entered, the artist-sorted album jump list is entered; and, if item "Artist" is selectively entered, the artist jump list is entered. Consequently, a correlation between a group jump operation and a list of selectively entered jump modes is provided.

FIG. 16 shows processing to be executed in response to a group jump action to be actually executed when a group jump operation is executed on the basis of the selective setting of the jump list such as described above. It is to be noted that, in FIG. 16, a track has already been reproduced.

Referring to FIG. 16, in step S201, it is determined whether a "+" direction jump operation has been executed. In step S202, it is determined whether a "-" direction jump operation has been executed. If an FF operation has been executed at the album position as the above-mentioned "+" direction jump operation in step S201, then it is determined in step S203 whether that jump operation is a long-pressed operation or not. Namely, it is determined whether the FF operation at the album position has continued for a predetermined period of time or longer.

If the above-mentioned predetermined period of time has passed before the above-mentioned FF operation ends and therefore the FF operation is found not to be a long-pressed operation, then the procedure goes to step S204 to execute processing for reproducing the first track in an adjacent group in the "+" direction on the list determined for jump action. Namely, control is executed such that the track with the track name thereof positioned at the beginning under a group arranged next to a group to which the track being reproduced belongs on the list determined in step S104 of FIG. 15 is reproduced. Consequently, a group jump action in the "+" direction has been executed.

It should be noted that a term "group" as used herein denotes a group set as a jump target to be set for each list described above; if an album jump list is specifically determined, this group is a group on an album basis on the list. Likewise, if an artist-sorted album jump list is determined, this group is also a group on an album basis on the list. If an artist jump list is determined, this group is a group on an artist basis on the list.

In addition, as described above, each jump list in this case is obtained by sorting the content IDs in the content management information 18b on the basis of the corresponding attribute information. Therefore, in this case, in reproducing a particular track by specifying the name thereof on the list, control is executed such that the reproduction is started on the basis of the information of the content ID related with the information of that track name. It is to be noted that, the above-mentioned processes are the same as in step S207, S209, and S212

If the long-pressing operation is found in step S203, then the procedure goes to step S205 to start the processing of sequentially displaying the group names on the entered list in the "+" direction. Namely, the display control block 14 is controlled such that the group names arranged on the entered list are sequentially selected in the order of arrangement and the information about the selected group names is displayed on the display block 15. To be more specific, the display control block 14 is controlled such that, if an album jump list has been entered as the album jump mode, the album names on the album jump list are sequentially selected in the order of arrangement and the information about the selected album names is displayed on the display block 15; if an artist-sorted album jump has been entered as the artist-sorted album jump mode, the album names on the artist-sorted album jump list are sequentially selected in the order of arrangement and the information about the selected album names is displayed on the display block 15; and, if an artist jump list has been entered as the artist jump mode, the artist names on the artist jump list are sequentially selected in the order of arrangement and the information about the selected artist names is displayed on the display block 15. In this case, the information about a group name to be started for selection on the list is the information about a group name arranged next to a group to which the track being reproduced belongs, for example.

In step S206, it is determined whether the long-pressed operation has ended. If the FF operation at the continued album position is found ended as the long-pressed operation, then the procedure goes to step S207 to reproduce the first track in the group displayed at the time when the long-pressed operation ended. Namely, it is controlled that, when the sequential display processing started in step S205 is executed, the reproduction of a track related with the information of a track name arranged at the beginning of the list among the track names below the information of the group name selected at the end of the long pressed operation on the list. Consequently, a jump action to each group selected from the sequential display is realized.

If an FR operation is found executed at the album position as a "-" direction jump operation in step S202, then the procedure goes to step S208 as shown to determine whether that jump operation is a long-pressed operation or not. Namely, it is determined whether an FR operation at the album position continues for a predetermined period of time or longer.

If the FR operation is found not to be a long-pressed operation in step S208, then the procedure goes to step S209 to execute the processing of reproducing the first track of a group that is adjacent in "-" direction on the list entered for a jump action. Namely, control is executed that the track related with the information of a track name positioned at the beginning of the list under a group arranged before a group to which the track being reproduced on the list entered in step S104 belongs is reproduced. Consequently, the group jump action in "-" direction has been executed.

If the jump operation is found to be a long-pressed operation in step S208, then the procedure goes to step S210 to start the processing of sequentially displaying, in the "-" direction, the group names on the entered list. Namely, the display control block 14 is controlled such that the group names arranged on the determined list are sequentially selected in the reverse order to be sequentially displayed on the display block 15. In this case, a group name to be selected on the list is a group name arranged before the group name to which the tracks being reproduced belongs, for example.

In step S211, it is determined whether the long-pressed operation has ended. If the FR operation is found ended at the album position after the long-pressed operation, then the procedure goes to step S212 to also reproduce the first track in the group displayed at the time of the ending of the long-pressed operation. Consequently, also when a long-pressed operation is executed in the "-" direction, a jump action to a group selected from among the groups being sequentially displayed.

The present invention has been described as above by use of embodiments thereof; however, the present invention is not limited to the above-described embodiments. For example, in the above-mentioned embodiments, audio data is used as content data; in addition to audio data, content data includes video data based on still images or moving images, such as movies, television programs, video programs, photographs, pictures, and drawings, for example, and any other kinds of data, such as electronic books (e-books), games, and software.

In the above-described embodiments of the invention, the grouping on the list for jump action is executed on an album basis and an artist basis; it is also practicable to execute the grouping on a genre basis, for example, namely, on the basis of attribute information.

In the above-described embodiments of the invention, various lists for jump actions are generated by the recording/reproducing apparatus 2 and the generated lists are stored in a predetermined recording media (in the above-mentioned embodiments, the flash memory 18); it is also practicable to generate the jump lists by an external device, which is the personal computer 3, for example, and the recording/reproducing apparatus 2 records the jump lists thus generated to a recording media of the recording/reproducing apparatus 2.

In the above-described embodiments of the invention, the reproduction of a start track in a group that is adjacent on the list is started as a group jump action; it is also practicable to start the reproduction of a track other than the start track.

When a group jump operation is executed in the "-" direction by an FF operation, a cueing operation can also be executed to a start track in a group to which a track being reproduced belongs on the list. In this case, it is also practicable that, when, after a group jump operation has been executed once in the "-" direction, a group jump operation is executed again in the "-" direction within a predetermined duration of time, a jump operation can also be made to a group arranged before a group being reproduced on the list.

In the above-described embodiments of the invention, only a jump operation on a group basis is executed on the basis of a jump list; it is also practicable that jumps can be made not only on the basis of group but also on the basis of track (namely, normal FF/FR operations). To be more specific, in this case, when the jump mode has been selected and entered as shown in FIG. 12B, the jump list corresponding to the entered jump mode is related with the FF/FR operation done at the album position and this list is also related with the FF/FR operation (a normal FF/FR operation) at the neutral position (P2 shown in FIG. 6A). If a normal FF operation is executed while a track is being reproduced, a track next adjacent (in the "+" direction) on the list is reproduced. Consequently, track jump actions can be executed regardless of the range of reproduction obtained by searching.

It should be noted that if a normal FR operation has been executed, a cueing operation is executed on a track being reproduced (namely, the reproduction of track is executed again from the beginning in the jump list. In this case, when an FR operation is executed again within a predetermined period of time, for example, a track adjacent in the "-" direction in the related jump list is reproduced. Consequently, a track jump action in the "-" direction can be made regardless of a range set as a reproduction range, as with a track jump action in the "+" direction.

In the above-described embodiments of the invention, the jump lists are determined as directed by a user operation; however, it is also practicable to determine the jump lists automatically by the apparatus side. For example, each jump list to be related with each jump operation can be determined automatically in accordance with the contents of a search operation done. Namely, if a track to be reproduced is determined by executing a search operation for artist, album, and track in this order as shown in FIGS. 7A to 7D, an album-sorted artist jump list is related to each jump operation. If a track to be reproduced is determined by executing a search operation on artist and track in this order (namely, if a track is selected from the list of all tracks arranged by artist with item "All Artist" selected and displayed on the screen shown in FIG. 7B, each artist jump list is related with each jump operation. Further, if a track to be reproduced is determined by executing a search operation on album and track in this order as shown in FIGS. 8A to 8C, each album jump list is related with each jump operation.

It should be noted that the automatic relating of each jump operation with each jump list is also applicable to the case in which a jump list is related with a normal FF/FR operation as shown above.

In the above-described embodiments of the invention, the recording/reproducing apparatus 2 is configured to incorporate a semiconductor memory as a recording media. The reproducing apparatus according to an embodiment of the invention may include any reproducing apparatuses that are configured to reproduce the content data recorded to predetermined recording media, such as CD, DVD, hard disk drive, and memory card, for example.

In the above-described embodiments of the invention, the main frame of the recording/reproducing apparatus 2 has a display device. It is also practicable to arrange the display device for the recording/reproducing apparatus 2 onto a cable-connected remote controller block. In this case, the main frame of the recording/reproducing apparatus 2 may be configured to execute display control in the same manner as when an externally attached display device is controlled.

In the above-described embodiments of the invention, the range of reproduction is determined by a search path for identifying a content data to be reproduced by way of example; it is also practicable to determine the range of reproduction by "Repeat Mode" of the setting menu described with reference to FIG. 12A, for example. In this case, the selection of content data by search mainly functions to specify content data and does not function to determine the range of reproduction. "Repeat Mode" includes "Normal", "Folder", "Repeat All", "Repeat Folder", "Repeat 1 Song", "Repeat Shuffle All", and "Repeat Shuffle Folder". The following describes these modes. "Normal" reproduces all content data subsequent to the content data being reproduced and then stops reproduction. "Folder" reproduces all content data subsequent to the content data being reproduced of an album or a folder in which the content data being reproduced is contained and then stops reproduction. "Repeat All" reproduces the content data being reproduced and then repeatedly reproduces all content data. "Repeat Folder" repeatedly reproduces the content data in an album or a folder in which the content data being reproduced is contained. "Repeat 1 Song" repeatedly reproduces the content data being reproduced. "Repeat Shuffle All" reproduces the content data being reproduced and then reproduces all content data in a random sequence. "Repeat Shuffle Folder" repeatedly and in a random sequence reproduces the content data contained in an album or a folder in which the content data being reproduced is contained.

Namely, in the setting of the range of reproduction, the setting of the range of reproduction by "Repeat Mode" can set the reproduction of all content data in the range of reproduction or the content data contained in a particular folder or album.

A procedure of determining the range of reproduction by "Repeat Mode" of the setting menu is as follows.

First, the user long-presses the SEARCH/MENU key 8b shown in FIGS. 6A and 6B to cause the display block 15 to display the setting menu screen shown in FIG. 12A onto the display block 15. Next, from the setting menu displayed on the display block 15, the user selects "Repeat Mode" and then selects one of the above-mentioned modes. Consequently, the user can set the range of reproduction to all content data or the content data contained in a particular folder or album.

Configuring the functional blocks shown in FIG. 5 by hardware allows the execution of the above-mentioned sequence of processing operations in a hardware approach.

In the above-described embodiments of the invention, the data configuration is provided in which a group jump list is arranged in addition to a search list. It is also practicable to arrange a group jump list that may also function as a search list, thereby allowing the user to use this group jump list for both search and group jump purposes.

While preferred embodiments of the present invention have been described using specific terms, such description is for illustrative purpose only, and it is to be understood that changes and variations may be made without departing from the spirit or scope of the following claims.

## Claims

1. A reproducing apparatus comprising:
an operator block (8);
a storage block (22) configured to store content management information having identification information for identifying content data and attribute information about said content data and a sort list with said content management information arranged by group on the basis of predetermined said attribute information;
a reproducing block (2) configured to reproduce content data; and
a control block (21) configured to set a sort list to be referenced when a predetermined operation is executed through said operator block and, when a predetermined operation is entered through said operator block, select, on the basis of said set sort list, a group adjacent to a group to which content data being reproduced belongs.

2. The reproducing apparatus according to claim 1, wherein said control block reads content data contained in said adjacent group on the basis of said set sort list to cause said reproducing block to reproduce said read content data.

3. The reproducing apparatus according to claim 1 or 2. wherein
said storage block stores a plurality of different sort lists, and
said control block sets one of said plurality of sort lists as a sort list that is referenced when a predetermined operation is executed through said operator block.

4. The reproducing apparatus according to anyone of claims 1 to 3, wherein said control block determines whether to set a range of reproduction to a group and, if said range of reproduction is set in a group, restricts reading of content data such that content data contained in a group to which content data being reproduced belongs is read on the basis of said sort list.

5. The reproducing apparatus according to anyone of claims 1 to 3, wherein said control block determines whether to set a range of reproduction in a group and, if said range of reproduction is not set in a group, reads content data from said sort list on the basis of said sort list, thereby causing said reproducing block to reproduce said read content data.

6. The reproducing apparatus according to claim 4 or 5, wherein, if another predetermined operation is executed through said operator block, said control block executes a cueing operation on content data on the basis of said sort list.

7. The reproducing apparatus according to anyone of claims 1 to 6, wherein
said operator block has a cylindrical control that is movable between a first position and a second position and rotatable in a first rotary direction and a second rotary direction, and
said predetermined operation is provided by setting said cylindrical control to said first position and rotating said cylindrical control in one of said rotary directions.

8. The reproducing apparatus according to anyone of claims 1 to 7, wherein said control block selects a predetermined group from groups on said sort list on the basis of said sort list, selectively specifies predetermined content data from said selected predetermined group, reads said selectively specified content data, and causes said reproducing block to reproduce said read content data.

9. A content selection method comprising the steps of:
setting a sort list with content management information having identification information for identifying content data and attribute information of said content data arranged by group on the basis of predetermined said attribute information as data to be reference when a predetermined operation is executed through an operator block; and
selecting, on the basis of said set sort list, a group adjacent to a group to which content data being reproduced belongs when a predetermined operation is executed through said operator block.

10. The content selection method according to claim 9, further comprising the steps of:
reading content data contained in said adjacent group on the basis of said set sort list: and
controlling reproduction so as to cause a reproducing block to reproduce said read content data.

11. The content selection method according to claim 9 or 10, wherein said sort list is provided in plurality and, in said setting step, one of said plurality of sort lists is set as a sort list to be referenced when a predetermined operation is executed through said operator block.

12. The content selection method according to anyone of claims 9 to 11, further comprising the steps of:
determining whether to set a range of reproduction in a group;
restricting reading of content data so as to read content data contained in a group to which content data being reproduced belongs on the basis of said sort list if said range of reproduction is set in a group; and
controlling reproduction so as to cause said reproducing block to reproduce said read content data.

13. The content selection method according to anyone of claims 9 to 11, further comprising the steps of:
determining whether to set a range of reproduction in a group;
restricting reading of content data so as to read content data contained in a sort list on the basis of said sort list if said range of reproduction is not set in a group; and
controlling reproduction so as to cause said reproducing block to reproduce said read content data.

14. The content selection method according to claim 12 or 13, further comprising the step of:
executing a cueing operation on content data on the basis of said sort list when another predetermined operation is executed through said operator block

15. The content selection method according to anyone of claims 9 to 11. wherein
said operator block has a cylindrical control that is movable between a first position and a second position and rotatable in a first rotary direction and a second rotary direction. and
said predetermined operation is provided by setting said cylindrical control to said first position and rotating said cylindrical control in one of said rotary directions.

16. The content selection method according to anyone of claims 9 to 15, further comprising the steps of:
selecting a predetermined group from groups on said sort list on the basis of said sort list:
selectively specifying predetermined content data from said selected group;
reading said selectively specified content data: and
controlling search reproduction for causing said reproducing block to reproduce said read content data.

17. A recording media recorded with a computer-readable program for making a computer execute the steps of:
setting a sort list with content management information having identification information for identifying content data and attribute information of said content data arranged by group on the basis of predetermined said attribute information as data to be reference when a predetermined operation is executed through an operator block; and
selecting, on the basis of said set sort list, a group adjacent to a group to which content data being reproduced belongs when a predetermined operation is executed through said operator block.
